# EUROPÄISCHE PATENTANMELDUNG

(11) **EP 4 464 629 A1**
(43) Veröffentlichungstag der Anmeldung: **20.11.2024**
(21) Anmeldenummer: 24175332.6
(22) Anmeldetag: 13.05.2024
(51) Int. Cl.: B65G 17/00, B65G 47/71

(54) **TRAGPLATTENLINIENVERTEILER ZUM VERTEILEN VON FÖRDERGUT VON EINER SPUR AUF MEHRERE SPUREN**

(30) Priorität: 16.05.2023 DE 102023112833
(71) Anmelder: MULTIVAC Sepp Haggenmüller SE & Co. KG, 87787 Wolfertschwenden (DE)
(72) Erfinder: BEHR, Markus, 87488 Betzigau (DE)
(74) Vertreter: Grünecker Patent- und Rechtsanwälte PartG mbB

(57) **Zusammenfassung**

Tragplattenlinienverteiler (100) zum Verteilen von Fördergut (130) von einer Spur (151) auf mehrere Spuren (153, 154, 155), der Tragplattenlinienverteiler umfassend einen Fördergurt (101), wenigstens eine an dem Fördergurt angeordnete und quer zu einer Förderrichtung (T) von Fördergut bewegbare Tragplatte (102) mit einem Führungselement (132), eine Führung (105) mit einem einspurigen Bereich (151) und einem in Förderrichtung (T) stromab des einspurigen Bereichs angeordneten mehrspurigen Bereich (152) mit wenigstens zwei Spurführungen (253, 254), in die das Führungselement (132) eingreifen kann, und ein Verstellelement (270) zum Einstellen einer Position wenigstens einer der zwei Spurführungen (253, 254) quer zur Förderrichtung (T).

## Beschreibung

Die vorliegende Erfindung betrifft einen Tragplattenlinienverteiler zum Verteilen von Fördergut von einer Spur auf mehrere Spuren gemäß Anspruch 1 sowie ein Verfahren zum Verstellen einer Position wenigstens einer Spurführung eines mehrspurigen Bereichs einer Führung eines Tragplattenlinienverteilers gemäß Anspruch 13.

### Stand der Technik

Tragplattenlinienverteiler sind aus dem Stand der Technik hinreichend bekannt. Diese umfassen üblicherweise einen Fördergurt, auf dem eine Reihe von Tragplatten angeordnet ist, die quer zu einer durch den Fördergurt definierten Förderrichtung verschoben werden können. Auf diesen Tragplatten kann Fördergut transportiert werden.

Es ist bekannt, die Tragplatten mittels einer Führung von einem zunächst einspurigen Bereich, in dem die Tragplatten in Förderrichtung zunächst alle hintereinander transportiert werden, auf einen mehrspurigen Bereich zu überführen, in dem einzelne Tragplatten quer zur Förderrichtung verschoben sein können. Hierdurch ist ein Aufteilen des Förderguts auf unterschiedliche Spuren, bspw. zum Zuführen des Förderguts zu unterschiedlichen nachfolgenden Einrichtungen, möglich.

Die Einsetzbarkeit eines Tragplattenlinienverteilers ist dabei an die Ausgestaltung des einspurigen und mehrspurigen Bereichs der Führung gekoppelt, da dieser insbesondere die Verteilbreite, auf der die Tragplatten quer zur Förderrichtung verteilt werden können, und/oder den Abstand der Spuren im mehrspurigen Bereich definiert. Dies schränkt den möglichen Einsatz eines Tragplattenlinienverteilers ein oder erfordert für eine Änderung der verwendeten Verteilbreiten oder Abstände erhebliche Umrüstarbeiten.

### Aufgabe

Ausgehend vom bekannten Stand der Technik besteht die zu lösende technische Aufgabe somit darin, einen flexibel einsetzbaren Tragplattenlinienverteiler anzugehen, der gleichzeitig verschleißarm betrieben werden kann.

### Lösung

Diese Aufgabe wird erfindungsgemäß durch den Tragplattenlinienverteiler zum Verteilen von Fördergut von einer Spur auf mehrere Spuren gemäß Anspruch 1 sowie das Verfahren zum Verstellen einer Position wenigstens einer Spurführung eines mehrspurigen Bereichs einer Führung eines Tragplattenlinienverteilers gemäß Anspruch 13 gelöst. Vorteilhafte Weiterbildungen der Erfindung sind in den Unteransprüchen erfasst.

Der erfindungsgemäße Tragplattenlinienverteiler zum Verteilen von Fördergut von einer Spur auf mehrere Spuren umfasst einen Fördergurt, wenigstens eine an dem Fördergurt angeordnete und quer zu einer Förderrichtung von Fördergut bewegbare Tragplatte mit einem Führungselement, eine Führung mit einem einspurigen Bereich und einem in Förderrichtung stromab des einspurigen Bereichs angeordneten mehrspurigen Bereich mit wenigstens zwei Spurführungen, in die das Führungselement eingreifen kann, und ein Verstellelement zum Einstellen einer Position wenigstens einer der zwei Spurführungen quer zur Förderrichtung.

Die Spurführungen können insbesondere gesehen in einer Förderrichtung des Führungselements links und rechts positioniert sein und sich entlang der Strecke, über die das Führungselement mit der Tragplatte befördert werden soll, erstrecken. Die Spurführungen können geradlinig und/oder zumindest teilweise gekrümmt ausgestaltet sein. Die Erfindung ist diesbezüglich nicht beschränkt. Dass das Verstellelement eine Position wenigstens eine der zwei Spurführungen quer zur Förderrichtung einstellt ist bevorzugt so zu verstehen, dass die Spurführung zumindest teilweise deformiert und dadurch zumindest teilweise umpositioniert wird.

Mit diesem Tragplattenlinienverteiler ist eine Anpassung an sich ändernde Gegebenheiten, wie etwa ein Wechsel der Übergabeposition von dem mehrspurigen Bereich an nachgeordnete Einrichtungen, einfach möglich. Gleichzeitig kann durch geeignete Veränderung der Spurführung ein Verschleiß des Führungselements reduziert werden.

Es kann vorgesehen sein, dass wenigstens eine Spurführung zwei gegenüberliegende, flexible Begrenzungen umfasst, die einen Eingriffsbereich begrenzen, in den das Führungselement eingreifen kann. Die flexiblen Begrenzungen können bspw. Langbleche sein oder Langbleche umfassen. Diese sind mit vergleichsweise geringem Kraftaufwand deformierbar und erlauben somit eine Einstellung der Verteilbreite des Tragplattenlinienverteilers und/oder des Abstands einzelner Spuren über einen weiten Bereich.

In einer Ausführungsform ist vorgesehen, dass zwischen dem einspurigen Bereich und dem mehrspurigen Bereich eine Weiche angeordnet ist, die das Führungselement von dem einspurigen Bereich in eine der wenigstens zwei Spurführungen überführen kann. Die Weiche kann mechanisch oder elektromotorisch betätigt werden und eine zuverlässige Verteilung in dem mehrspurigen Bereich ermöglichen.

Wenigstens eine Spurführung kann fest mit der Weiche verbunden sein. Die Weiche oder zumindest ein Teil der Weiche dient somit als Fixpunkt für die Spurführung und eine Deformation der Spurführung findet in einem sonstigen Teil der Spurführung statt, wenn dessen Position durch das Verstellelement eingestellt wird. Mit dieser Ausführungsform ist eine zuverlässige Übergabe des Führungselements und damit der Tragplatte von der Weiche an die Spurführung gewährleistet.

Es kann vorgesehen sein, dass die wenigstens eine Spurführung zwischen der Weiche und dem Verstellelement zumindest teilweise S-förmig verläuft. Dies kann bspw. dadurch erreicht werden, dass die Spurführungen an der Weiche und dem Verstellelement jeweils fest angeordnet bzw. mit diesen fest verbunden sind. Ist die Spurführung als flexible Begrenzungen umfassend ausgestaltet, verformen sich diese abhängig von der Position des Verstellelements und der damit eingestellten Position der Spurführungen, was zu einer mehr oder minder starken S-förmigen Krümmung der Spurführung führt. Dieser Verlauf ist für das verwendete Material der Spurführung belastungsarm, realisiert aber gleichzeitig eine möglichst verschleißfreie Führung des Führungselements.

In einer Ausführungsform ist vorgesehen, dass das Verstellelement zwei gegenüberliegende Verstellbacken umfasst und dass ein erstes Element einer Spurführung beweglich mit den Verstellbacken verbunden ist und ein zweites Element einer Spurführung, das stromab oder stromauf des ersten Elements angeordnet ist, starr mit den Verstellbacken verbunden ist.

Das erste Element der Spurführung kann sich bspw. von dem einspurigen Bereich und/oder einer Weiche in Richtung der Verstellbacken erstrecken und von diesen gehalten werden. Es kann in der Verstellbacke bspw. mit Hilfe eines Langlochs und eines Eingriffselements beweglich gelagert sein, sodass bei Bewegung der Verstellbacke eine Kompensation des sich dadurch verändernden Abstandes zwischen dem einspurigen Bereich und der Verstellbacke, der von der Spurführung überbrückt werden muss, erfolgen kann. Das zweite Element kann insbesondere den Übergang von dem mehrspurigen Bereich an eine stromab angeordnete weitere Einrichtung, insbesondere Transporteinrichtung definieren. Durch starre Verbindungen des zweiten Elements mit den Verstellbacken kann eine Deformation dieses Teils der Spurführung beim Verstellen der Position vermieden werden, was eine zuverlässige Übergabe an nachgeordnete Einrichtungen gewährleistet.

In einer Ausführungsform ist vorgesehen, dass das zweite Element stromab des ersten Elements angeordnet ist und/oder wobei das erste Element und die Verstellbacken eine Längenausgleichsanordnung bilden. Die Längenausgleichsanordnung kann insbesondere durch eine in Förderrichtung bewegliche Lagerung des ersten Elements in den Verstellbacken bewirkt werden, sodass das Führungselement stets durch die Spurführung geführt werden kann, unabhängig von der verstellten Position.

Es kann vorgesehen sein, dass das Verstellelement ein Antriebselement und eine Verstelleinheit umfasst, wobei das Antriebselement die Verstelleinheit zum Verstellen der Position wenigstens einer Spurführung oder von wenigstens zwei Spurführungen antreiben kann. Wird von der Verstelleinheit die Position wenigstens oder genau einer Spurführung verstellt, kann dies zur individualisierten Veränderung der Verteilbreite und/oder von Übergabepunkten von Fördergut an nachgeordnete Einrichtungen genutzt werden. Wird die Verstelleinheit zum Verstellen der Position wenigstens zweier Spurführungen verwendet, wird die Komplexität des Tragplattenverteilers reduziert.

Es kann vorgesehen sein, dass das Verstellelement zum synchronen Verstellen der Position von wenigstens zwei Spurführungen ausgebildet ist. Hiermit wird eine gleichmäßige Verteilung von Fördergut ermöglicht.

Ein synchrone Verstellen der Position der wenigstens zwei Spurführungen kann ein Verstellen der Position der Spurführungen in dieselbe Richtung oder in entgegengesetzte Richtungen umfassen. Dies erhöht die Flexibilität beim Einsatz des Tragplattenlinienverteilers.

In einer Ausführungsform ist vorgesehen, dass der Tragplattenlinienverteiler eine Steuereinheit zum Steuern des Verstellens der Position der wenigstens einen Spurführung mit dem Verstellelement und/oder ein Betätigungselement zum manuellen Betätigen des Verstellelements zum Verstellen der Position der wenigstens einen Spurführung umfasst. Wird eine Steuereinheit zum Steuern des Verstellelements vorgesehen, kann ein automatisiertes Verändern der Spurführung bspw. nach einer Umrüstung und ggf. abhängig von bspw. in einem Speicher der Steuereinheit hinterlegten Informationen über die Übergabe an nachgeordnete Einrichtungen realisiert werden. Das manuelle Betätigen des Verstellelements erlaubt eine flexible Einstellung der Position der Spurführungen.

Es kann vorgesehen sein, dass das Verstellelement zum stufenlosen Verstellen der Position der wenigstens einen Spurführung ausgebildet ist. Die Flexibilität beim Einstellen der Spurführungen wird hiermit weiter erhöht.

Das erfindungsgemäße Verfahren zum Verstellen einer Position wenigstens einer Spurführung eines mehrspurigen Bereichs einer Führung eines Tragplattenlinienverteilers, der Tragplattenlinienverteiler umfassend einen Fördergurt, wenigstens eine an dem Fördergurt angeordnete und quer zu einer Förderrichtung von Fördergut bewegbare Tragplatte mit einem Führungselement, die Führung mit einem einspurigen Bereich und dem in Förderrichtung stromab des einspurigen Bereichs angeordneten mehrspurigen Bereich mit wenigstens zwei Spurführungen, in die das Führungselement eingreifen kann, und ein Verstellelement zum Einstellen einer Position wenigstens einer der zwei Spurführungen quer zur Förderrichtung, umfasst ein Verstellen der Position wenigstens einer der zwei Spurführungen quer zur Förderrichtung von einer ersten Position in eine zweite Position mit dem Verstellelement. Dieses Verfahren erlaubt ein flexibles Einstellen der Übergabe von Fördergut an nachgeordnete Einrichtungen.

Es kann vorgesehen sein, dass das Verstellen der Position der wenigstens einen der wenigstens zwei Spurführungen stufenlos zwischen der ersten und der zweiten Position erfolgt. Die stufenlose Verstellbarkeit erhöht die Flexibilität hinsichtlich der erzielbaren Übergabepunkte und Verteilbreiten.

In einer Ausführungsform ist vorgesehen, dass das Verstellelement ein Antriebselement und eine Verstelleinheit umfasst, wobei das Antriebselement die Verstelleinheit zum Verstellen der Position wenigstens einer Spurführung oder von wenigstens zwei Spurführungen antreibt, wobei optional die wenigstens zwei Spurführungen synchron zueinander von der Verstelleinheit verstellt werden. Ein automatisiertes und für einen Bediener einfaches Verstellen der Spurführungen wird hiermit erreicht.

Sämtliche beschriebenen Ausführungsformen sind miteinander kombinierbar.

### Kurze Beschreibung der Figuren

- Fig. 1: zeigt eine schematische Ansicht eines Tragplattenlinienverteilers gemäß einer Ausführungsform.
- Fig. 2: zeigt eine schematische Ansicht der Führung und eines Verstellelements.
- Fig. 3: zeigt eine weitere schematische Ansicht einer Ausführungsform einer Führung und eines Verstellelements.

### Ausführliche Beschreibung

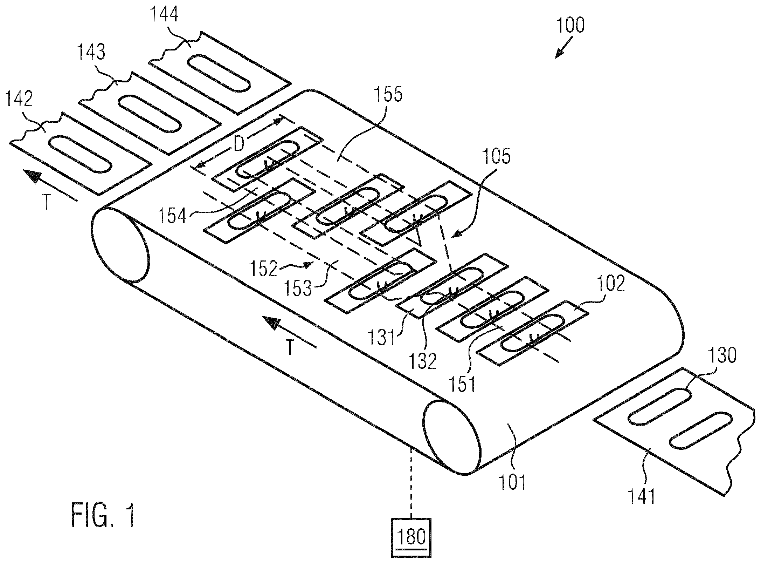

Figur 1 zeigt einen Tragplattenlinienverteiler 100 gemäß einer Ausführungsform. Der Tragplattenlinienverteiler 100 ist hier zwischen einer stromauf angeordneten ersten Transporteinrichtung oder Fördereinrichtungen 141 und mehrerer stromauf des Tragplattenlinienverteilers angeordneter Transporteinrichtungen oder Fördereinrichtungen 142 bis 144 gezeigt. Die Fördereinrichtungen 141 sowie 142 bis 144 sind grundsätzlich so ausgestaltet, dass sie ein Fördergut 130, wie bspw. Lebensmittel oder Verpackungen mit darin eingebrachten Lebensmitteln oder andere Verpackungsgüter entlang einer Transportrichtung oder Förderrichtung T transportieren können. Der Tragplattenlinienverteiler 100, der zwischen diesen Fördereinrichtungen 141 und 142 bis 144 angeordnet ist, ist ebenfalls ausgebildet, Fördergut 130 entlang der Förderrichtung T zu transportieren.

Der Tragplattenlinienverteiler 100 umfasst in dieser Ausführungsform einen Fördergurt 101. Dieser kann bspw. als umlaufender Fördergurt ausgestaltet sein und sich auch gesehen in der Förderrichtung T links und rechts einer Verteilfläche des Tragplattenlinienverteilers 100 erstrecken, wobei Teile des Fördergurtes bspw. durch feste Verbindungen quer zur Förderrichtung miteinander verbunden sein können. Der Fördergurt ist diesbezüglich nicht beschränkt.

Weiterhin umfasst der Tragplattenlinienverteiler 100 wenigstens eine, bevorzugt eine Vielzahl von Tragplatten (beispielsweise 10 oder 20) 102, auf denen Produkt bzw. Fördergut 130 in dem Tragplattenlinienverteiler befördert werden kann. Die Tragplatte 102 kann bspw. eine Tragfläche 131 umfassen, auf der das Fördergut 130 angeordnet sein kann. Weiterhin umfasst die Tragplatte 102 wenigstens ein Führungselement 132, dass in eine Führung 105 des Tragplattenlinienverteilers 100 eingreifen kann. Entsprechend kann sich das Führungselement 132 durch geeignete Aussparungen in dem Fördergurt 101 oder den beschriebenen Verbindungen hindurch in Richtung der Führung 105 erstrecken, die in einem von dem Fördergurt 101 zumindest teilweise umschlossenen Bereich angeordnet sein kann.

Die Führung 105 dient dazu, die Tragplatten 102 in Förderrichtung von einem zunächst einspurigen Bereich 151, in dem die Tragplatten 102 alle in derselben Position quer zur Förderrichtung T transportiert werden, auf einen mehrspurigen Bereich zu verteilen, in dem die Tragplatten 102 in verschiedenen Spuren (wenigstens zwei Spuren 153 bis 155) transportiert werden können. In dem mehrspurigen Bereich 152 ist dafür vorgesehen, dass jede Spur eine Spurführung umfasst, die hier mit denselben Bezugszeichen 153 bis 155 versehen ist und in die das Führungselement 132 einer Tragplatte eingreifen kann, sodass die Spurführungen die Tragplatte in der jeweiligen Spur von dem einspurigen Bereich 151 zu wenigstens einer der Fördereinrichtungen 142 bis 144 transportieren können.

Bevorzugt kann jede Spurführung zwei Begrenzungen umfassen, die sich gesehen in Förderrichtung T links und rechts der Spur 153 bis 155 im mehrspurigen Bereich 152 erstrecken und ein Führungselement 132 einer Tragplatte 102 zwischen ihnen bzw. in einen zwischen den Begrenzungen gebildeten Bereich aufnehmen können. Dazu können sich die Begrenzungen in einer Richtung senkrecht zu einer Transportebene, in der die Tragplatten entlang der Förderrichtung T transportiert werden, verlaufenden Richtung über eine Führungstiefe erstrecken, die bevorzugt wenigstens gleich der Eingriffstiefe des Führungselements 132 in die Spurführung 153 - 155 ist, sodass das Führungselement 132 von weiteren Umwelteinflüssen geschützt sein kann.

Dem Tragplattenlinienverteiler 100 kann eine Steuereinheit 180 bspw. in Form eines Computers oder einer zentralen Steuereinrichtung des Tragplattenlinienverteilers 100 und/oder einer Anlage, die den Tragplattenlinienverteiler und optional wenigstens eine weitere Einrichtung umfasst, zugeordnet sein, die einen Prozessor und/oder zugeordneten Speicher umfasst, um wenigstens eine Funktion des Tragplattenlinienverteilers zu steuern.

In der in Figur 1 gezeigten Ausführungsform werden die Tragplatten und damit das Fördergut 130 durch die Verteilung auf die Spuren 153 bis 155 des mehrspurigen Bereichs 152 so angeordnet, dass das Fördergut 130 an die nachgeordneten Transporteinrichtungen 142 bis 144 selektiv übergeben werden kann, also bspw. ein erstes Fördergut an die Fördereinrichtung 144 und ein zweites Fördergut an die Fördereinrichtung 142 übergeben werden. Die Ausdehnung des mehrspurigen Bereichs 152 in einer Richtung quer zur Förderrichtung T kann als Verteilbreite D verstanden werden, da die Ausdehnung des mehrspurigen Bereichs 152 in dieser Richtung definiert, über welchen Bereich bzw. welche Verteilbreite D Tragplatten bzw. Fördergut an nachgeordnete Transporteinrichtungen 142 bis 144 übergeben werden können.

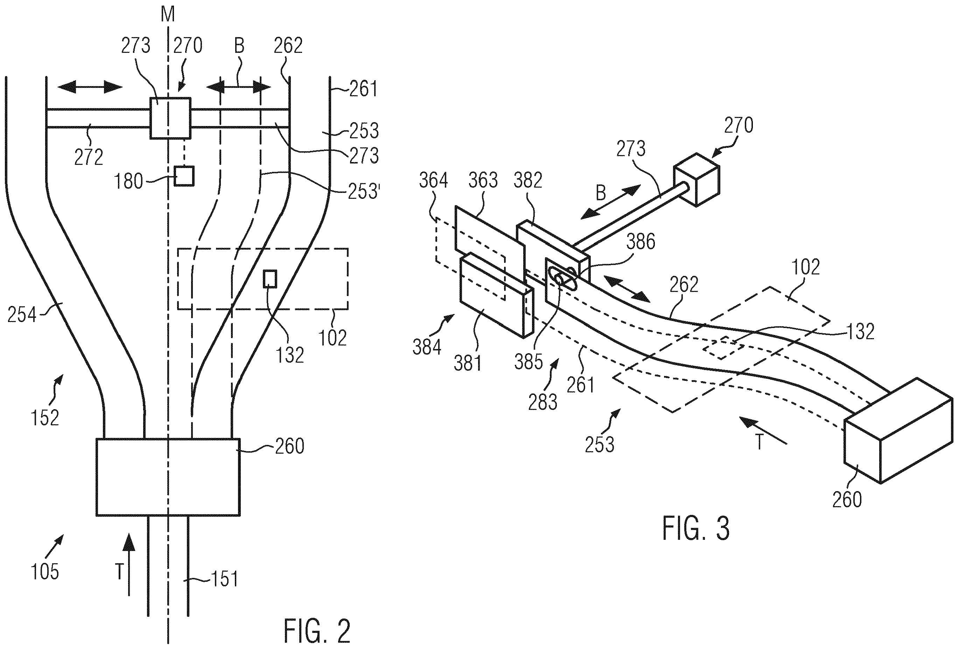

Erfindungsgemäß ist vorgesehen, dass die Verteilbreite D des Tragplattenlinienverteilers oder zumindest der Abstand zweier Spurführungen zueinander mit Hilfe einer in diesem Zusammenhang mit Figur 2 noch beschriebenen Verstellelement verändert werden kann, in dem eine Position wenigstens einer der Spurführungen 153 bis 155 verändert wird. Wird eine Position einer Spurführung 154 (die zwischen den äußeren Spurführungen 153 und 155 angeordnet ist) verändert, resultiert dies nicht zwangsläufig in einer Veränderung der Verteilbreite D, ist jedoch gleichsam vorteilhaft, um ein Übergeben von Fördergut an eine nachgeordnete Fördereinrichtung 143 bspw. an einer bestimmten Stelle quer zur Förderrichtung T zu realisieren.

Figur 2 zeigt eine schematische Ansicht einer Führung 105 mit einem einspurigen Bereich 151 und einem stromab in Förderrichtung T angeordneten mehrspurigen Bereich 152 mit entsprechenden Spurführungen 253 und 254. In der hier gezeigten Ausführungsform ist zu gezeigt, dass jede der Spurführungen 253 und 254 äußere Begrenzungen 261 und 262 (siehe hierzu auch die Ausführungsformen der Figur 1) umfasst, die sich in der Förderrichtung einer Tragplatte 102 entlang der jeweiligen Spurführung 153 links und rechts des Führungselements 132, das in die Spurführung 253 eingreifen kann, erstrecken. Bevorzugt ist jede der Begrenzungen als zumindest stückweise zusammenhängendes Element (bspw. ein Langblech oder allgemein Blech) gebildet bzw. umfasst ein solches. Bevorzugt ist jede der Begrenzungen 261 und 162 weiterhin flexibel, sodass die Spurführung und insbesondere die flexiblen Begrenzungen 261 und 262 der Spurführung zusammen in einer Richtung B quer zur Förderrichtung T bewegt werden können. Hierdurch kann, wie bereits im Zusammenhang mit der Figur 1 beschrieben, die Position der Spurführung 253 verändert werden bzw. die Position, in der ein Fördergut von der Tragplatte 102 bspw. an eine nachgeordnete Fördereinrichtung übergeben wird, eingestellt werden.

Zu diesem Zweck kann der Tragplattenlinienverteiler ein Verstellelement 270 umfassen, das allgemein so ausgestaltet ist, dass es die Positionen wenigstens einer Spurführung (entweder der Spurführung 253 oder der Spurführung 254 oder beide) quer zur Förderrichtung T entlang der Richtung B bevorzugt stufenlos verstellen kann. Dies ist hier schematisch durch die gestrichelt dargestellte Anordnung der Spurführung 253 (mit Bezugszeichen 253') angedeutet, die verglichen mit der durchgezogen dargestellten Position der Spurführung 253 entlang der dargestellten Doppelpfeilrichtung in der Richtung B bewegt wird. Dies bewirkt eine Deformation der Spurführung 253.

Bevorzugt kann die Spurführung 253 oder zumindest ein Teil der Spurführung zwischen dem einspurigen Bereich 151 und/oder einer Weiche 260, die die Tragplatten 102 von dem einspurigen Bereich auf die mehreren Spurführungen 253 und 254 verteilt, S-förmig verlaufen. Bspw. kann vorgesehen sein, dass die Weiche mit den Spurführungen 253 und 254 bzw. den Begrenzungen 261 und 262 fest verbunden ist. Dies bedeutet insbesondere, dass selbst bei Veränderung der Position der Spurführung 253 (beispielhaft) in die Position 253' sich die Position der Übergabe der Tragplatte 102 von dem einspurigen Bereich 151 an die Spurführung 253 innerhalb der Weiche 260 nicht ändert. Lediglich die weitere Förderrichtung der Tragplatte 102, die dem Verlauf der Spurführung 253 folgt, wird verändert.

Das Verstellelement kann ein Antriebselement 271 und eine Verstelleinheit 273 umfassen, die so angeordnet und ausgestaltet sind, dass sie die Position wenigstens einer Spurführung (bspw. die Spurführung 253) verstellen können. Bspw. kann das Antriebselement 271 als Stellantrieb oder Servoantrieb ausgestaltet sein und etwa mit Hilfe einer Spindel oder einer anderen Einrichtung die Bewegung der mit dem Verstellelement 270 verbundenen Spurführung 253 erreichen.

Es kann auch vorgesehen sein, dass das Verstellelement 270 so ausgestaltet ist, dass es zwei Spurführungen 253 und 254 hinsichtlich ihrer Position verstellen kann, wobei dann für jede Spurführung eine separate Verstelleinheit 273 bzw. 272 vorgesehen sein kann (beispielsweise zwei unabhängig voneinander bewegbare Spindeln). Dabei kann vorgesehen sein, dass das Verstellelement 270 die Position der Spurführungen 253 und 254 unabhängig voneinander einstellen kann, indem bspw. die Verstelleinheit 273 und die Verstelleinheit 272 unabhängig voneinander betätigt werden können. Dazu kann bspw. vorgesehen sein, dass das Verstellelement zwei Antriebselemente umfasst, die jeder der Verstelleinheiten separat zugeordnet und separat ansteuerbar sind (etwa über die Steuereinheit 180).

Alternativ kann auch vorgesehen sein, dass ein Verstellen der Position der zwei Spurführungen 253 und 254 durch das Verstellelement 270 synchron gewährleistet wird. Bei einer synchronen Verstellung der Position kann insbesondere vorgesehen sein, dass die Spurführungen 253 und 254 entweder in derselben Richtung B quer zur Förderrichtung T verstellt werden können oder in entgegengesetzte Richtungen entlang der Richtung B quer zur Förderrichtung T verstellt werden können. Wird also bspw. ausgehend von einer gedachten Mittelachse M des Fördergurtes die Position zumindest eines Teils der Spurführung 253 entlang der Richtung B um einen Abstand A verschoben, kann die Position der Spurführung 254 bei synchroner Bewegung entweder in der entgegengesetzten Richtung um den Abstand A verschoben werden (dies bewirkt ein Vergrößern oder Verkleinern der Verteilbreite, die durch die Spurführungen 253 und 254 definiert wird) oder beide Spurführungen 253 und 254 werden synchron in dieselbe Richtung um den Abstand A bewegt. Dies bewirkt kein Verändern der Verteilbreite als Abstand zwischen den Spurführungen 253 und 254, kann jedoch zum Verändern einer Übergabeposition von Fördergut an nachgeordnete Einrichtungen verwendet werden.

Ist eine synchrone Bewegung der Spurführungen vorgesehen, so kann das Verstellelement ein einziges Antriebselement umfassen, das mit den Spurführungen zum Verändern ihrer Position mit einer Doppelspindel verbunden ist, die dann eine synchrone Bewegung der Spurführungen oder eines Teils der Spurführungen entsprechend der beschriebenen Ausführungsformen durch Betätigung durch das Antriebselement bewirkt.

Figur 3 zeigt eine Ausführungsform einer Spurführung 253 stromab der Weiche 260 und ein Verstellelement 270.

In der hier gezeigten Ausführungsform umfasst die Spurführung 253 zwei flexible Begrenzungen 261 und 262 in Form von Langblechen oder allgemein Blechen, wobei diese bevorzugt mit der Weiche 260 fest verbunden sind, sodass sich ein Übergabepunkt von Tragplatten 131 von der Weiche an die Spurführung 253 unabhängig von dem Verstellen der Position der Spurführung quer zur Förderrichtung T nicht verändert. Die flexiblen Begrenzungen 262 und 261 sind Teil eines ersten Elements 383 der Spurführung. Dieses erstreckt sich von der Weiche 260 (oder dem einspurigen Bereich) bis zu der Verstelleinheit 270 und ist insbesondere mit Verstellbacken 381 und 382 des Verstellelements, die einander gegenüberliegen können, verbunden. Diese Verbindung kann insbesondere so vorgesehen sein, dass die Verstellbacken 381 und 382 durch die Verstelleinheit 273 entlang der Richtung B verschoben werden können und die Begrenzungen 261 und 262 bzw. das erste Element 383 der Spurführung dieser Bewegung der Verstellbacken zumindest teilweise folgen. Da das erste Element 383 fest mit der Weiche 260 verbunden ist, ändert sich lediglich der Verlauf dieses Teils der Spurführung abhängig von dem Verstellen der Position der Verstellbacken 381 und 382 entlang der Richtung B, nicht jedoch der Übergabepunkt von Tragplatten 102 von der Weiche 260 an die Spurführung 253.

Beim Verstellen der Position der Verstellbacken 381 und 382 ändert sich der Abstand zwischen der Weiche 260 und den Verstellbacken 381 und 382. Da die Begrenzungen 261 und 262 fest mit der Weiche 260 verbunden sind, andererseits aber ebenfalls über eine unveränderbare Länge verfügen, kann es, um unerwünschte Verformungen der Begrenzungen 261 und 262 zu vermeiden, vorgesehen sein, dass das erste Element und insbesondere die Begrenzungen 261 und 262 beweglich mit der jeweiligen Verstellbacke 381 bzw. 382 verbunden sind. Die bewegliche Verbindung kann dabei bevorzugt eine Längenausgleichsanordnung realisieren, sodass durch ein Bewegen des ersten Elements in einer Richtung mit einer Komponente parallel zur Förderrichtung T relativ zu den Verstellbacken 381 und 382 eine Kompensation der Abstandsveränderung zwischen den Verstellbacken 381 und 382 sowie der Weiche erfolgt.

Die Längenausgleichsanordnung kann bspw. dadurch realisiert werden, dass jede Verstellbacke einen Eingriffspin oder Eingriffselement 386 umfasst, der in ein Langloch 385, das sich im Wesentlichen parallel zur Förderrichtung T erstreckt, eingreifen kann. Ein Lösen der Verbindung kann dadurch vermieden werden, dass der Eingriffspin 386 eine Abdeckung umfasst, die ein Herausrutschen des Eingriffspins aus dem Langloch 385 vermeidet, wobei auf der gegenüberliegenden Seite der Abdeckung die jeweilige Verstellbacke angeordnet ist. Beim Bewegen der Verstellbacke gleitet dann zum Längenausgleich bzw. Abstandsausgleich der Eingriffspin 386 in dem Langloch 385 entlang, während gleichzeitig die Spurführung von der jeweiligen Verstellbacke in Richtung B deformiert wird.

Es kann vorgesehen sein, dass die Spurführung 253 ein zweites Element 384 umfasst, dass sich stromab des ersten Elements oder stromauf des ersten Elements 383 erstreckt. In der hier gezeigten Ausführungsform erstreckt sich das zweite Element 384 stromab des ersten Elements 383 und kann insbesondere fest mit der Verstellbacke 381 verbunden sein. In der in Figur 3 gezeigten Ausführungsform umfasst das zweite Element 384 analog zum ersten Element zwei Begrenzungen 363 und 364, die in der hier dargestellten Ausführungsform erneut als Bleche ausgestaltet sein können, und nicht zwingend miteinander verbunden sein müssen. Sie begrenzen lediglich in einer Richtung quer zur Förderrichtung T einen Bewegungsspielraum eines Eingriffspins 132 einer Tragplatte 102, die entlang der Spurführung 253 befördert wird.

Alternativ kann auch vorgesehen sein, dass das zweite Element 384 als U-Profil ausgestaltet ist, das auf der der Eingriffsseite des Führungselements 132 einer Tragplatte 130 gegenüberliegenden Seite eine Verbindung zwischen den Begrenzungen 363 und 364 umfasst. Dies kann die Stabilität des zweiten Elements erhöhen und eine zuverlässige Übergabe eines Förderguts an eine nachgeordnete Einrichtung bewirken.

Während in den vorangegangenen Ausführungsformen der Figuren 2 und 3 das Verstellelement als ein Antriebselement umfassend ausgestaltet war (Element 271 in der Figur 2) kann ebenso vorgesehen sein, dass anstelle des Antriebselements ein Betätigungselement 271 (etwa eine Handkurbel, die mit einer Spindel 272 und/oder 273 wirkverbunden sein kann, um eine Bewegung wenigstens einer Spurführung zu bewirken) vorgesehen ist, das mit der Verstelleinheit oder allgemein dem Verstellelement 270 derart verbunden sein kann, das durch manuelle Betätigung des Betätigungselements das Verstellelement zum Verstellen der Position einer Spurführung betätigt wird.

## Patentansprüche

1. Tragplattenlinienverteiler (100) zum Verteilen von Fördergut (130) von einer Spur (151) auf mehrere Spuren (153, 154, 155), der Tragplattenlinienverteiler umfassend einen Fördergurt (101), wenigstens eine an dem Fördergurt angeordnete und quer zu einer Förderrichtung (T) von Fördergut bewegbare Tragplatte (102) mit einem Führungselement (132), eine Führung (105) mit einem einspurigen Bereich (151) und einem in Förderrichtung (T) stromab des einspurigen Bereichs angeordneten mehrspurigen Bereich (152) mit wenigstens zwei Spurführungen (253, 254), in die das Führungselement (132) eingreifen kann, und ein Verstellelement (270) zum Einstellen einer Position wenigstens einer der zwei Spurführungen (253, 254) quer zur Förderrichtung (T).

2. Tragplattenlinienverteiler (100) nach Anspruch 1, wobei wenigstens eine Spurführung (253, 254) zwei gegenüberliegende, flexible Begrenzungen (261, 262) umfasst, die einen Eingriffsbereich begrenzen, in den das Führungselement (132) eingreifen kann.

3. Tragplattenlinienverteiler (100) nach Anspruch 1 oder 2, wobei zwischen dem einspurigen Bereich (151) und dem mehrspurigen Bereich (152) eine Weiche (260) angeordnet ist, die das Führungselement (132) von dem einspurigen Bereich in eine der wenigstens zwei Spurführungen (253, 254) überführen kann.

4. Tragplattenlinienverteiler (100) nach Anspruch 3, wobei wenigstens eine Spurführung (253, 254) fest mit der Weiche (260) verbunden ist.

5. Tragplattenlinienverteiler (100) nach einem der Ansprüche 3 oder 4, wobei die wenigstens eine Spurführung (253, 254) zwischen der Weiche (260) und dem Verstellelement (270) zumindest teilweise S-förmig verläuft.

6. Tragplattenlinienverteiler (100) nach einem der Ansprüche 1 bis 5, wobei das Verstellelement (270) zwei gegenüberliegende Verstellbacken (381, 382) umfasst und wobei ein erstes Element (383) einer Spurführung (253) beweglich mit den Verstellbacken verbunden ist und ein zweites Element (384) der Spurführung (253), das stromab oder stromauf des ersten Elements (383) angeordnet ist, starr mit den Verstellbacken (381, 382) verbunden ist.

7. Tragplattenlinienverteiler (100) nach Anspruch 6, wobei das zweite Element (384) stromab des ersten Elements (383) angeordnet ist und/oder wobei das erste Element (383) und die Verstellbacken (381, 382) eine Längenausgleichsanordnung bilden.

8. Tragplattenlinienverteiler (100) nach einem der Ansprüche 1 bis 7, wobei das Verstellelement (270) ein Antriebselement (271) und eine Verstelleinheit (272) umfasst, wobei das Antriebselement die Verstelleinheit zum Verstellen der Position wenigstens einer Spurführung (253, 254) oder von wenigstens zwei Spurführungen (253, 254) antreiben kann.

9. Tragplattenlinienverteiler (100) nach Anspruch 8, wobei das Verstellelement (270) zum synchronen Verstellen der Position von wenigstens zwei Spurführungen (253, 254) ausgebildet ist.

10. Tragplattenlinienverteiler (100) nach Anspruch 9, wobei das synchrone Verstellen der Position der wenigstens zwei Spurführungen (253, 254) ein Verstellen der Position der Spurführungen (253, 254) in dieselbe Richtung oder in entgegengesetzte Richtungen umfasst.

11. Tragplattenlinienverteiler (100) nach einem der Ansprüche 1 bis 10, weiterhin umfassend eine Steuereinheit (180) zum Steuern des Verstellens der Position der wenigstens einen Spurführung (253, 254) mit dem Verstellelement (270) und/oder weiterhin umfassend ein Betätigungselement (271) zum manuellen Betätigen des Verstellelements (270) zum Verstellen der Position der wenigstens einen Spurführung (253, 254).

12. Tragplattenlinienverteiler (100) nach einem der Ansprüche 1 bis 11, wobei das Verstellelement (270) zum stufenlosen Verstellen der Position der wenigstens einen Spurführung (253, 254) ausgebildet ist.

13. Verfahren zum Verstellen einer Position wenigstens einer Spurführung (253, 254) eines mehrspurigen Bereichs (151) einer Führung (105) eines Tragplattenlinienverteilers (100), der Tragplattenlinienverteiler (100) umfassend einen Fördergurt (101), wenigstens eine an dem Fördergurt angeordnete und quer zu einer Förderrichtung (T) von Fördergut (130) bewegbare Tragplatte (102) mit einem Führungselement (132), die Führung (105) mit einem einspurigen Bereich (151) und dem in Förderrichtung (T) stromab des einspurigen Bereichs angeordneten mehrspurigen Bereich (151) mit wenigstens zwei Spurführungen (253, 254), in die das Führungselement (132) eingreifen kann, und ein Verstellelement (270) zum Einstellen einer Position wenigstens einer der zwei Spurführungen (253, 254) quer zur Förderrichtung (T), das Verfahren umfassend ein Verstellen der Position wenigstens einer der zwei Spurführungen (253, 254) quer zur Förderrichtung (T) von einer ersten Position in eine zweite Position mit dem Verstellelement (270).

14. Verfahren nach Anspruch 13, wobei das Verstellen der Position der wenigstens einen der wenigstens zwei Spurführungen (253, 254) stufenlos zwischen der ersten und der zweiten Position erfolgt.

15. Verfahren nach Anspruch 13 oder 14, wobei das Verstellelement (270) ein Antriebselement (271) und eine Verstelleinheit (272) umfasst, wobei das Antriebselement (271) die Verstelleinheit (272) zum Verstellen der Position wenigstens einer Spurführung (253, 254) oder von wenigstens zwei Spurführungen (253, 254) antreibt, wobei optional die wenigstens zwei Spurführungen (253, 254) synchron zueinander von der Verstelleinheit (272) verstellt werden.
